# EUROPEAN PATENT SPECIFICATION

(11) **EP 2 248 501 B1**
(45) Date of publication and mention of the grant of the patent: **19.02.2014**
(21) Application number: 09159624.7
(22) Date of filing: 07.05.2009
(51) Int. Cl.: A61G 7/10, B60B 19/12

(54) **Power assisting system and method**
Hilfskraftsystem und -verfahren
Système d'assistance électrique et procédé

(43) Date of publication of application: 10.11.2010
(73) Proprietor: Force Fiction I Halmstad AB, 302 50 Halmstad (SE)
(72) Inventor: Holmberg, Ulf, 302 56, Halmstad (SE); Petersson, Daniel, 310 44, Getinge (SE); Salomonsson, Tommy, 302 50, Halmstad (SE); Johansson, Jonas, 330 10, Bredaryd (SE)
(74) Representative: Lind, Urban Arvid Oskar

(56) References cited:
- EP-A- 0 768 076
- WO-A-2004/069125
- WO-A-2006/062905
- US-A- 4 715 460
- US-A1- 2008 202 837

## Description

### Technical Field of the Invention

The present invention relates to a power assisting system for providing power assistance to a user moving a body, the body being movable in at least a first, a second and a third body direction.

### Background Art

Physically disabled patients may have difficulties moving themselves. These patients may hence need help by e.g. one or even several caretakers in order to be transferred from one place to another, e.g. to be lifted to/from the toilet to/from the bed. Such lifting may be rather heavy and strenuous for the caretaker depending among other things on the weight of the patient, and may thus result in injuries. Furthermore, consideration needs to be given to the patient's comfort and wellbeing. To this end patient transport vehicles such as patient lifts have been introduced, which together with some type of sling carrying the patient enable for the caretaker(s) to be assisted in the often heavy lifting task. A lift may usually be operated by a single caretaker, and may be utilized in the hospital, nursing home, or long term care facility. For some patients, the lift can enable families or caretakers to provide a safe way to mobilize the patient in the home setting rather than an institutional setting.

In order to maneuver the patient up and down, the caretaker is commonly assisted by motor driven power assistance provided with the lift. By means of e.g. a joystick or remote controller controlling the motor, the caretaker is enabled to accomplish lifting of the patient with less effort required, i.e. without using human strength.

Furthermore, patient lifts are commonly provided with wheels enabling for the caretaker to maneuver the patient lift into a desired position. Maneuvering across the floor of a lift carrying e.g. a heavy patient may however be a trying task for the caretaker, and different solutions to overcome this problem has been proposed. US 2007/0067905, for instance, discloses a patient transport apparatus provided with a set of free-moving wheels, such as orbital casters, allowing omnidirectional travel of the patient transport apparatus for precise placement, positioning and/or control. Although such casters allowing omnidirectional maneuvering of the patient lift facilitates moving the lift for the caretaker, he or she may still experience the movement to be rather strenuous (see also WO-A-2006/062905).

Consequently, there is a need for a solution supporting omnidirectional maneuvering of e.g. a patient lift from one place to another, which overcomes problems with prior art. Hence there is a need for an approach by which the above-related drawbacks are at least partly eliminated.

### General disclosure of the Invention

According to a first aspect of the invention as claimed, this may be achieved at least partly by a power assisting system for providing power assistance to a user moving a body, the body being movable in at least a first, a second and a third body direction. The system comprises a first wheel arrangement for providing a first assisting rotation comprising a multidirectional wheel arranged on the body, the wheel being adapted to rotate in a first, a second and a third rotational direction; a motor connected to the wheel for providing an assisting rotation of the wheel in the wheel's first or second rotational direction; and means for measuring a speed of rotation of the wheel in the wheel's first and second rotational direction. The system further comprises a control unit adapted to adjust the first assisting rotation based on a first measured speed of rotation of the wheel in the wheel's first or second rotational direction and at least one previously measured speed of rotation of the wheel in the wheel's first or second rotational direction, the first assisting rotation providing power assistance to the user in moving the body in the first and second body direction.

With a power assisting system in accordance with the present invention, multidirectional movement of a body by a user in a first, a second and a third body direction is hence enabled along with enablement of user friendly power assistance in the first and second body direction. The first and second body directions may be opposed to one another in a plane for instance in parallel with a floor, meanwhile the third body direction may be any other direction in that plane, for instance a direction perpendicular to the first and second body directions. The body may be any object or vehicle in need of being transferred by a user in different directions across e.g. a floor, and may for instance be a patient transport lift such as a patient lift, mobile lift, or hospital bed, or a hoist lift for carrying goods rather than human beings. By substituting at least one of the wheels commonly provided on such a body with a first wheel arrangement in accordance with the present invention, a less strenuous effort may be required by the user, e.g. caretaker, to maneuver the body across the e.g. floor for precise placement, positioning and/or control.

The omnidirectional movement of the body is supported in that the first wheel arrangement provides a multidirectional wheel allowed to rotate in a first, a second and a third rotational direction, thereby allowing the wheel to rotate around at least two different rotation axes. The multidirectional wheel thus provides the user with the ability to easily move the body from one place to another across an area, i.e. in at least the first, second and third body direction, as the wheel is allowed to rotate in a plurality of rotational directions.

Since the first wheel arrangement comprises a motor connected to the multidirectional wheel, the user may be assisted in moving the body by a first assisting rotation provided by the motor. The assisting rotation may be provided in two opposing directions. The type of motor utilized is not critical, and may hence for instance be a brushless motor as well as a brushed motor. The power assistance may be provided in a first or second rotational direction of the wheel, i.e. in two opposing directions of the wheel, and may hence be provided in the corresponding first or second direction of the body, i.e. in two opposing directions of the body. Consequently, should the user, e.g. caretaker, push the body in the first or second body direction, he or she may to the fullest be assisted by the first assisting rotation provided by the motor, whereas the first assisting rotation may be partial or even non-existing should the user push the body in other directions such as the third body direction.

The user friendliness of the power assisting system of the present invention is supported in that there is no need for a traditional user interface for control of the first assisting rotation provided by the motor of the first wheel arrangement. Rather than controlling the first assisting rotation by means of for instance a joystick or remote control which the user may experience to lack intuition, power assistance may be initiated by the user in moving the body at least partly in the first or second body direction by pushing or pulling anywhere on the body. Such a user initiated movement of the body may regardless of where on the body the user selects to place his e.g. hands to push or pull be detected by the means for measuring a speed of rotation of the wheel in the wheel's first and second rotational direction. The type of means for measuring a speed of rotation of the wheel is not critical to the present invention, and may according to one embodiment comprise a hall sensor sensing an angle of a rotor of a brushless motor, and according to another embodiment comprise one or several rotational encoders.

By adjusting the assisting rotation based on a first measured speed of rotation of the wheel in the wheel's first or second rotational direction and at least one previously measured speed of rotation of the wheel in the wheel's first or second rotational direction, a closed-loop feedback approach without a need for a reference value may be provided. Rather, a present speed of rotation may be measured and compared with one or several previously measured speeds of rotation, and the outcome of the comparison forms a base from which the assisting rotation provided by the motor may be derived. The feedback approach allows for the power assisting system to be sensitive to movements of the wheel of the first wheel arrangement provided by the user, thereby making reference signals from a man-machine interface superfluous. Rather than suppressing a disturbance, i.e. a user contributed drive force affecting the speed of rotation of the wheel, the feedback approach initiates the control unit to react by reinforcing and sustaining the body movement in the first or second body direction. The invention may be considered to introduce a positive feedback approach rather than a traditional negative feedback approach. By continuously adjusting the first assisting rotation based on a present measured speed of rotation of the wheel in the wheel's first or second rotational direction in comparison with one or several samples of previously derived speeds of rotation, the first assisting rotation may hence continuously be adjusted to the movement of the body and subsequently to the user provided rotation of the wheel. Power assistance is thereby supported in that additional rotation of the wheel of the first wheel arrangement may be generated by the motor of the first wheel arrangement, thus requiring less user initiated rotation to sustain a movement. Since the feedback is dynamic rather than static, and hence takes into account also previously applied user contributed drive forces affecting the speed of rotation, the assisting rotation may continue to affect the body even after a user contribution no longer exists.

Adjustable parameters defining the first assisting rotation may be tuned in order to suit an intended implementation. Such adjustable parameters may enable for the power assisting system to be implemented on a variety of different bodies of different shapes and weight, and the values of the parameters to be adjusted in accordance with e.g. the patients weight and/or the users strength. The first assisting rotation may for instance be adjusted based on the first measured speed of rotation in relation to the at least one previously measured speed of rotation This can be interpreted as feedback from filtered estimates of both acceleration and velocity. Thereby, both inertia and damping can be affected by the closed-loop feedback design.

Suitable wheels for implementation may be known wheels such as for instance an omniwheel, polywheel, Mecanum wheel, Ilon wheel, or Swedish wheel, although any wheel with similar characteristics naturally is covered within the scope.

According to an embodiment of the present invention, the power assisting system may further comprise a second wheel arrangement for providing a second assisting rotation, the second wheel arrangement corresponding to the first wheel arrangement, i.e. comprising a multidirectional wheel arranged on the body, the wheel being adapted to rotate in a first, a second and a third rotational direction; a motor connected to the wheel for providing an assisting rotation of the wheel in the wheel's first or second rotational direction; and means for measuring a speed of rotation of the wheel in the wheel's first and second rotational direction. The control unit may then further be adapted to adjust the second assisting rotation based on a second measured speed of rotation of the wheel of the second wheel arrangement in the wheel's first or second rotational direction and at least one previously measured speed of rotation of the wheel of the second wheel arrangement in the wheel's first or second rotational direction, the first assisting rotation in conjunction with the second assisting rotation providing power assistance to the user in moving the body in the first, second and third body direction.

In introducing a second wheel arrangement, the power assisting system may hence be enabled to support power assistance in more than two opposing body directions in a plane, which plane for instance may be parallel to a floor. The user may thereby experience multidirectional power assistance when moving the body, in that an additional second assisting rotation is applied to a wheel of the second wheel arrangement, which assisting rotation may be adjusted based on a second measured speed of rotation of the wheel of the second wheel arrangement in the wheel's first or second rotational direction and at least one previously measured speed of rotation of the wheel of the second wheel arrangement in the wheel's first or second rotational direction.

The relation between the first and second assisting rotations as well as which two body directions the second assisting rotation may support depend on the disposition of the second wheel arrangement in comparison to the first wheel arrangement. According to one embodiment, the first and the second wheel arrangements are arranged such that an imagined extension of an axis of the wheel of the first wheel arrangement intersects with an imagined extension of an axis of the wheel of the second wheel arrangement. Thereby, power assistance may be supported in the at least third body direction, and ultimately in any body direction in the mentioned plane. The extent of power assistance in a specific body direction may be dependent on to what extent the body direction coincides with the first or second direction of the wheel of the first or second wheel arrangement. Consequently, according to yet another embodiment, the first and the second wheel arrangements are arranged such that an imagined extension of an axis of the wheel of the first wheel arrangement intersects at an angle of 80-100 degrees with an imagined extension of an axis of the wheel of the second wheel arrangement. With an intersection at an angle of approximately 90 degrees, the body may be uniformly power assisted by the power assisting system in any body direction in the mentioned plane. The positioning of the wheels on the body and the distance there between may be arbitrary and adapted to the implementation at hand.

In order to support an alternative power assisting experience for the user, the system may further comprise a third wheel arrangement for providing a third assisting rotation, the third wheel arrangement corresponding to the first wheel arrangement, i.e. comprising a multidirectional wheel arranged on the body, the wheel being adapted to rotate in a first, a second and a third rotational direction; a motor connected to the wheel for providing an assisting rotation of the wheel in the wheel's first or second rotational direction; and means for measuring a speed of rotation of the wheel in the wheel's first and second rotational direction. The control unit may then further be adapted to adjust the third assisting rotation based on a third measured speed of rotation of the wheel of the third wheel arrangement in the wheel's first or second rotational direction and at least one previously measured speed of rotation of the wheel of the third wheel arrangement in the wheel's first or second rotational direction, the first assisting rotation in conjunction with the second and the third assisting rotation providing power assistance to the user in moving the body in the first, second and third body direction.

The introduction of the third wheel arrangement enables for further power assisting possibilities. Preferably, the three wheel arrangements are arranged in a favorable manner for provision of power assistance suitable for the implementation at hand, and consequently have a disposition in relation to one another in relation thereto. According to one embodiment, the first, the second and the third wheel arrangements are arranged such that an imagined extension of an axis of the wheel of the first wheel arrangement intersects at an angle of 100-140 degrees with an imagined extension of an axis of the wheel of the second wheel arrangement, the imagined extension of an axis of the wheel of the first wheel arrangement intersects at an angle of 100-140 degrees with an imagined extension of an axis of the wheel of the third wheel arrangement, and the imagined extension of an axis of the wheel of the second wheel arrangement intersects at an angle of 100-140 degrees with the imagined extension of an axis of the wheel of the third wheel arrangement. With such a disposition of the wheels of the first, second and third wheel arrangements, where an axis may be the axis of the first and second rotational direction of the corresponding wheel arrangement, a uniformly distributed multidirectional power assistance may be provided in any direction in a plane in parallel with e.g. a floor. Furthermore the introduction of the third wheel arrangement also enables power assistance for rotational movements of the body around its center of mass, in addition to the translational movements in the plane described in the foregoing.

The present invention additionally introduces a power assisting fixture comprising a body and a power assisting system in accordance with the above, by which similar effects as described in conjunction with the first aspect of the invention may be accomplished.

Furthermore, according to a second aspect as claimed, a method of providing power assistance by means of a power assisting system to a user moving a body is provided, the body being movable in at least a first, a second and a third body direction. The system comprises a first wheel arrangement for providing a first assisting rotation, which first wheel arrangement comprises a multidirectional wheel arranged on the body, the wheel being adapted to rotate in a first, a second and a third rotational direction; a motor connected to the wheel for providing an assisting rotation of the wheel in the wheel's first or second rotational direction; and means for measuring a speed of rotation of the wheel in the wheel's first and second rotational direction; and a control unit. The method may be performed by the control unit and comprises receiving a first measured speed of rotation of the wheel in the wheel's first or second rotational direction; and adjusting the first assisting rotation based on the first measured speed of rotation and at least one previously measured speed of rotation of the wheel in the wheel's first or second rotational direction, the first assisting rotation providing power assistance to the user in moving the body in the first and second body direction.

With such a method, similar effects as described in conjunction with the first aspect of the invention may be accomplished.

Additionally, a computer program is provided, for performing the steps of the method when the program is executed in the control unit.

Other aspects, benefits and advantageous features of the invention will be apparent from the following description and claims.

### Brief Description of the Drawings

These and other aspects of the present invention will now be described in more detail, with reference to the appended drawings showing currently preferred embodiments of the invention, wherein:
Figure 1 schematically illustrates an exemplifying overview of a power assisting system in accordance with a first embodiment of the present invention arranged on a patient lift;
Figure 2 depicts the embodiment of Figure 1 seen from above;
Figure 3 shows an exemplifying feedback block diagram of the first wheel arrangement of the power assisting system of Figure 1;
Figure 4 describes exemplifying steps performed by the control unit of the first embodiment in Figure 1; and
Figures 5a-d illustrate exemplifying wheel arrangements dispositions in accordance with alternative embodiments of the present invention.

### Detailed Description of the Preferred Embodiments of the Invention

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. It may also be noted that, for the sake of clarity, the dimensions of certain components illustrated in the drawings may differ from the corresponding dimensions in real-life implementations of the invention, for instance proportions between wheels and bodies, and their dimensions. Like reference characters refer to like elements throughout.

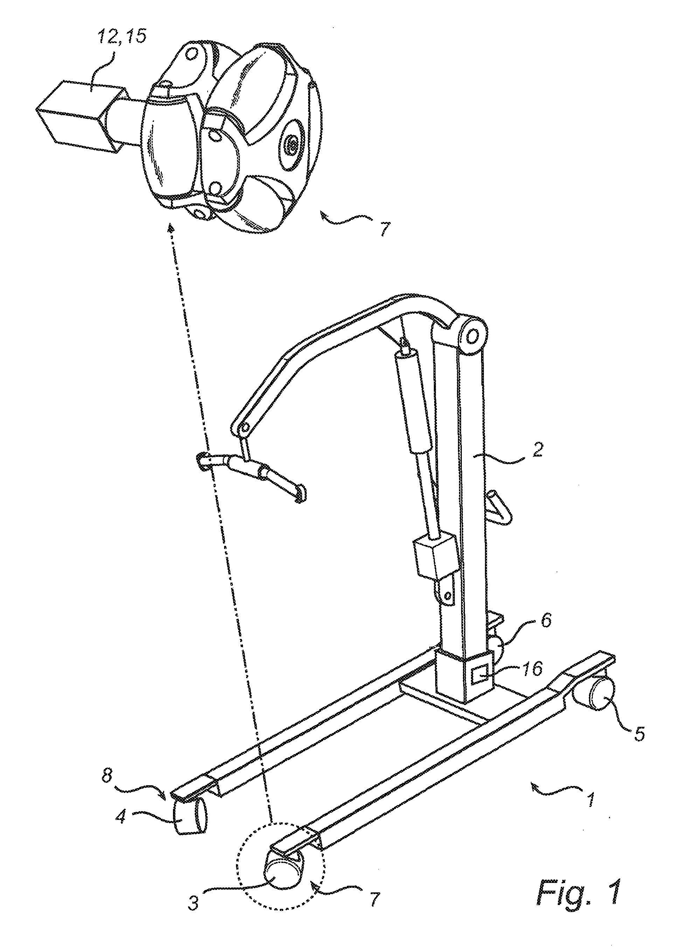

Figure 1 schematically illustrates an exemplifying overview of a power assisting system 1 in accordance with a first embodiment of the present invention arranged on a body 2. In the shown example, the body 2 is a patient lift adapted to carry patients; note however that the invention covers other bodies 2 such as any object or vehicle, often heavy, in need of being transferred by a user in different directions in a plane. According to other embodiments, the body 2 may hence likewise be for instance a hospital bed, or even a mobile lift or hoist lift for carrying goods rather than human beings. In the illustrated example, four wheels 3, 4, 5, 6 are arranged on the lift 2. Naturally, an arbitrary number of wheels may likewise be utilized, for instance one, three or five, and the number of wheels may be determined with the implementation at hand in mind. The wheels 5, 6 arranged in a supposed rear part of the exemplifying lift 2 are preferably although not necessarily omnidirectional and may hence rotate in a plurality of rotational directions. Alternatively, these passive rear wheels 5, 6 may be movable in a plurality of directions by implementation of other types of wheels, for instance casters, allowing for multidirectional movement. According to yet other embodiments, multidirectional movement of a supposed passive rear part of a body 2 may even be achieved by means of a sliding surface rather than wheels or casters.

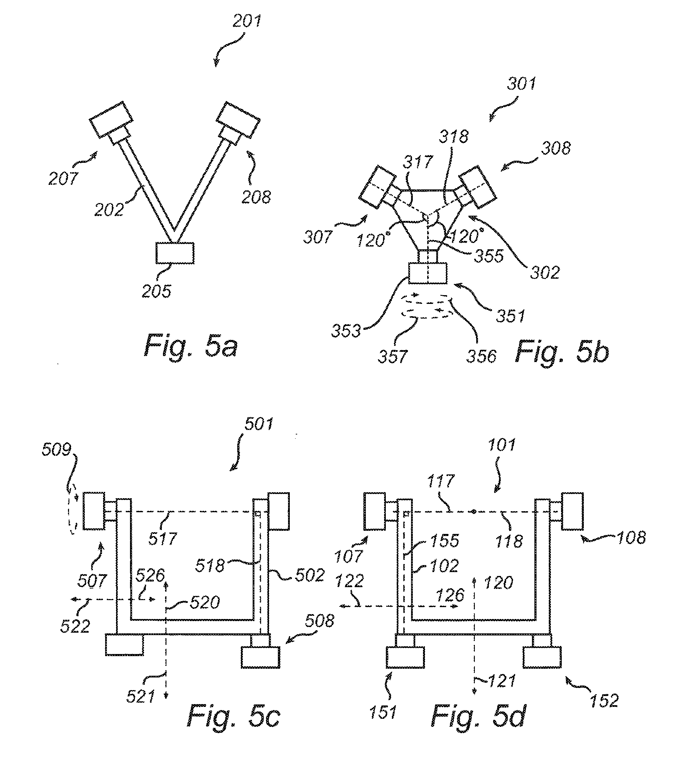

The power assisting system 1 of the first embodiment comprises a first 7 and a second 8 wheel arrangement. Although two wheel arrangements 7, 8 are chosen for the first embodiment, an arbitrary number of wheel arrangements is likewise within the scope of the present invention as will be further described later on in conjunction with Figure 5. The first wheel arrangement 7 of the embodiment of Figure 1 comprises the first wheel 3, and the second wheel arrangement 8 the second wheel 4. As the second wheel arrangement 8 resembles the first 7, a detailed description will in the following only be given of the latter. The first wheel 3 is here, as preferred, a multidirectional wheel, such as for instance an omniwheel, polywheel, Mecanum wheel, Ilon wheel, or Swedish wheel. The first wheel 3 may furthermore comprise a ball bearing and may to at least some extent be furnished with for instance rubber in order to inhibit skidding.

The first wheel arrangement 7 may in addition to the first wheel 3 comprise a motor 12 connected to the first wheel 3. Here, the motor 12 is a brushless motor in connection with a gear box adapted to transmit torque to the first wheel 3. Note however that according to other embodiments any feasible motor may be utilized, such as for instance a brushed motor should that be preferred and/or suitable for the implementation in mind. Furthermore, the first wheel arrangement 7 may comprise means 15 for measuring a speed of rotation of the first wheel 3. Any suitable measuring means 15 may be utilized; in the shown embodiment, the means 15 for measuring comprises a hall sensor sensing an angle of a rotor of the motor 12. Note that although the motor 12 and the means 15 for measuring a speed of rotation are depicted as being comprised within the same unit, where appropriate they 12, 15 may likewise be separated.

For control, the power assisting system 1 may furthermore comprise a control unit 16. Note that although the control unit 16 in Figure 1 is arranged as integrated with the lift 2, the invention is not restricted thereto; the control unit 16 may likewise be arranged at any arbitrary position wired or wirelessly connected to the measuring means 15 and motor 7 of the provided first wheel arrangement 7. The same applies for the second wheel arrangement 8. Furthermore, although there is only one control unit 16 with the exemplifying power assisting system 1 for both the first 7 and second 8 wheel arrangements, the second wheel arrangement 8 may likewise have a control unit separate from that of the first wheel arrangement 7, i.e. a control unit of its own. It is likewise possible that the control unit 16 may be integrated with the first wheel arrangement 7 in the vicinity of the motor 12 and/or the measuring means 15.

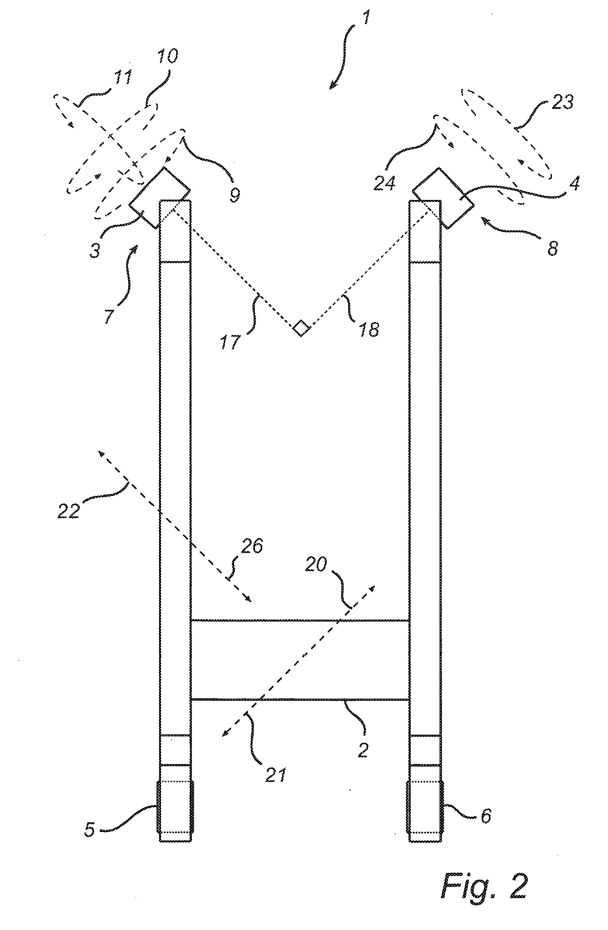

Further characteristics of the first wheel 3 will now be described in greater detail with reference to Figure 2. In Figure 2, the embodiment of Figure 1 is depicted from above. As illustrated, the first wheel 3 is here adapted to allow for rotation in a first 9, a second 10 and a third 11 rotational direction. The first 9 and second 10 rotational directions may be opposing, and the third rotational direction 11 may be any other direction, for instance as in the shown example a direction 11 perpendicular to the first 9 and second 10 rotational directions. The motor 12 of the first wheel arrangement 7 is here arranged for providing a first assisting rotation to the first wheel 3 in the wheel's first 9 or second 10 rotational direction. In the same manner, a motor of the second wheel arrangement 8 may be arranged for providing a second assisting rotation to the second wheel 4 in a first 23 and second 24 rotational direction of the second wheel 4.

By means of the multidirectional wheels 3, 4, 5, 6 shown in Figure 2, the lift 2 may be movable in any direction in a plane which for instance may be essentially parallel to the floor. In the illustrated example, a first 20, a second 21, a third 22 and a fourth 26 lift direction is identified. Rotation of the first wheel 3 in the wheel's first rotational direction 9 may result in movement of the lift 2 in the first lift direction 20. In the same manner, rotation of the first wheel 3 in the wheel's second rotational direction 10 may result in movement of the lift 2 in the second lift direction 21. Furthermore, rotation of the first wheel 3 in the wheel's third rotational direction 11 may result in movement of the lift in the third lift direction 22, and rotation of the first wheel 3 in a rotational direction opposed to the wheel's third rotational direction 11 may result in movement of the lift in the fourth lift direction 26.

In the illustrated embodiment, the first 7 and second 8 wheel arrangements are arranged such that an imagined extension 17 of an axis of the first wheel 3 intersects with an imagined extension 18 of an axis of the second wheel 4. Here, the imagined extensions 17, 18 intersect at an angle of approximately 90 degrees. With such a disposition of the second wheel arrangement 8 in relation the first wheel arrangement 7, rotation of the second wheel 4 in the wheel's second rotational direction 24 may result in movement of the lift 2 in the third lift direction 22, and rotation of the second wheel 4 in the wheel's first rotational direction 23 may result in movement of the lift 2 in the fourth lift direction 26. Although the intersection angle here is approximately 90 degrees, the invention is not restricted thereto; according to alternative embodiments, the first 7 and second 8 wheel arrangements may be arranged such that imagined extensions 17, 18 intersect at any arbitrary angle, which preferably may be determined based on the implementation in mind. As will be evident, the intersection angle of the imagined extensions 17, 18 may affect extent of power assistance available to the lift 2 in e.g. the respective first to fourth lift directions 20, 21, 22, 26.

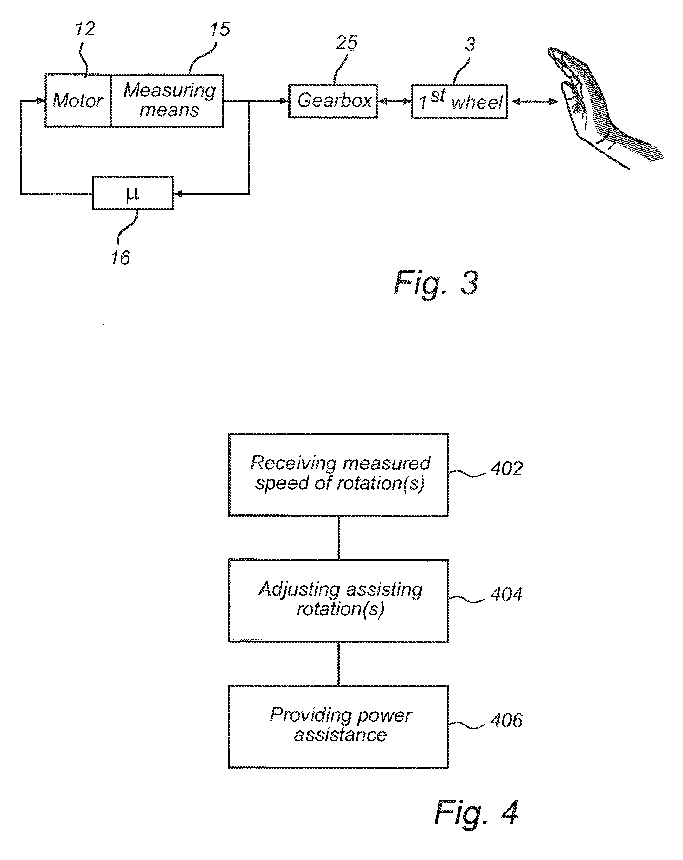

Turning now to Figure 3, an exemplifying feedback block diagram of the first wheel arrangement 7 of the power assisting system 1 of Figure 1 is shown. The block diagram illustrates a closed-loop feedback approach, and hence how sequences of events during movement of the lift 2 may affect the first wheel 3, a gear box 25 adapted to transmit torque to the first wheel 3, the motor 12 of the first wheel arrangement 7, the measuring means 15 of the first wheel arrangement 7 as well as the control unit 16. Naturally, a similar illustration applies for the second wheel arrangement 8. The functionality of the control unit 16 will in the following be described in further detail with reference to Figure 4, in conjunction with support from Figures 2 and 3.

Figure 4 describes exemplifying steps performed by the control unit 16 of the first embodiment in Figure 1, and hence reflects the power assisting system 1 in use. The functionality of the second wheel arrangement 8 resembles that of the first wheel arrangement 7, why in the following the behavior of the second wheel arrangement 8 may be assumed to correspond to great extent to that of the first wheel arrangement 7. It should be emphasized that the following steps not necessarily need to be performed in the order presented, and that the steps may be part of a continuous and repeated process.

Initially, the lift 2 may be for instance pushed or pulled by a user, which subsequently may cause the lift 2 to move in a corresponding lift direction such as for instance the first 20, second 21, third 22 or fourth 26 lift direction. As previously indicated, rotation of the first wheel 3 in the wheel's first rotational direction 9 may result in movement of the lift 2 in the first lift direction 20, and rotation of the first wheel 3 in the wheel's second rotational direction 10 may result in movement of the lift 2 in the second lift direction 21. If the user initiated movement at least partly coincides with e.g. the first lift direction 20, the first wheel 3 may hence rotate in its first rotational direction 9. The means 15 for measuring the speed or angle of rotation in the first 9 and second 10 rotational direction of the first wheel 3 may detect the provided rotation, and the control unit 16 may in a first step 402 receive the measured speed of rotation of the first wheel 3. At this stage, the present sample of measured speed of rotation may only be based on rotation provided by the user, i.e. user initiated rotation of the wheel.

The measuring means 15 may in the following continue to repeatedly measure the speed of rotation in the first 9 and second 10 rotational direction of the first wheel 3. The control unit 16 may store such samples of measured speed of rotation for comparison. The control unit 16 may hence compare a present sample of measured speed of rotation of the first wheel 3 in the wheel's first 9 or second 10 rotational direction with one or several previous samples of measured speed of rotation of the first wheel 3 in the wheel's first 9 or second 10 rotational direction. Should the present sample deviate from e.g. the last previous sample, the control unit 16 may deduct that power assistance should be applied by the motor 12 in the first 9 or second rotational direction of the first wheel 3. In other words, adjustment of the first assisting rotation to the first wheel 3 in the wheel's first 9 or second 10 rotational direction, i.e. power assistance in the first 20 or second 21 lift direction, may in step 404 be based on a present measured speed of rotation of the first wheel 3 in the wheel's first or second rotational direction 9, 10 and at least one previously measured sample.

The outcome of the comparison between a present and previous sample may hence form a base from which the first assisting rotation provided by the motor 12 to the first wheel 3 may be derived. The first assisting rotation may for instance be adjusted based on a present sample of measured speed of rotation in relation to at least one previous sample. This can be interpreted as feedback from filtered estimates of both acceleration and velocity, and thereby both inertia and damping can be affected by the closed-loop feedback design. By continuously adjusting the first assisting rotation based on comparison with previous samples, the first assisting rotation may hence in step 406 provide power assistance to the user in moving the lift in the first 20 or second 21 lift direction. The first assisting rotation may hence continuously be adjusted to the movement of the lift 2 in the first 9 or second 10 rotational direction of the first wheel 3 and subsequently to the user provided rotation of the first wheel 3. Rather than suppressing a disturbance, i.e. the user contributed rotation affecting the speed of rotation of the wheel 3, this feedback approach initiates the control unit 16 to react by reinforcing and sustaining the lift movement in the first 20 or second 21 lift direction. Power assistance may hence be supported in that an assisting additional torque of the first wheel 3 is generated by the motor of the first wheel arrangement 7 in the wheel's first 9 or second 10 rotational, thus requiring less rotation of the wheel from the user to sustain a movement of the lift 2 in the first 20 or second 21 lift direction.

As the user continues to e.g. push the lift 2 in the first 20 or second 21 lift direction, i.e. continues to provide rotation to the first wheel 3 in the wheel's first 9 or second 10 rotational direction, a new present measured speed of rotation of the first wheel 3 may consequently no longer necessarily only comprise user initiated rotation. That is, the user may experience power assistance in moving the lift 2.

Should the user in the following choose to push harder in the first 20 or second 21 lift direction, the means 15 for measuring may hence detect a present sample of increased speed of rotation in the first wheel's first 9 or second 10 rotational direction. The control unit 16 may then after comparison with one or several previous samples detect a difference and adjust the first assisting rotation in proportion thereto.

Should the user on the other hand choose to no longer push the lift 2 with effect in the first 20 or second 21 lift direction, the measuring means 15 and subsequently the control unit 16 may by comparison with previous samples detect the lacking user influence in that the speed of rotation of the first wheel 3 in the wheel's first 9 or second 10 rotational direction may have decreased.

In the foregoing, only the functionality of the first wheel arrangement 7 has been discussed. It should however be noted, that the motor of the second wheel arrangement 8 in a similar manner may utilize the second assisting rotation of the second wheel 4 in the wheel's first 23 and second 24 rotational direction, such that power assistance may be provided in at least the third 22 and fourth 26 lift directions. The first and second assisting rotations may hence interact to provide power assistance in the lift direction in which the user currently maneuvers the lift 2. In lift directions not supported by the assisting rotations, the user may need to at least to some extent by his or her own force maneuver the lift 2 by means of the multidirectional wheels 3, 4, 5, 6. The degree of power assistance in a specific lift direction may depend on to what extent that lift direction corresponds to the first 9 or second 10 rotational direction of the first wheel 3 and/or the first 23 or second 24 rotational direction of the second wheel 4.

The invention is not restricted to the advantageous embodiment described in the foregoing; numerous combinations comprising an arbitrary number of wheel arrangements in combination with bodies of different shapes and with a varying number of passive omnidirectional wheels are likewise within the scope. In the following, further examples will be described with reference to Figure 5.

Figures 5a-d illustrate exemplifying wheel arrangements dispositions in accordance with alternative embodiments of the present invention. Figure 5a shows a body 202 and an exemplifying power assisting system 201 comprising a first 207 and a second 208 wheel arrangement. The disposition of the wheels of the first 207 and second 208 wheel arrangements resembles that of the embodiment of Figure 1, with the exception that the wheel arrangements 207, 208 in the example of Figure 5a are arranged on a body 202 having a different shape. Instead of two passive omnidirectional wheels in a supposed rear end of the body 202, only one omnidirectional wheel 205 is provided.

Figure 5b shows a body 302 and an exemplifying power assisting system 301 comprising not only a first 307 and a second 308 wheel arrangement, but additionally a third wheel arrangement 351 corresponding to the first wheel arrangement 307. Note that the disposition of the three wheel arrangements 307, 308, 351 is exemplifying, and that numerous of other options are feasible. The disposition of the wheels of the first 307 and second 308 wheel arrangements in Figure 5b resembles that of the embodiment of Figure 1, with the exception that the wheel arrangements 307, 308 in the example of Figure 5b are arranged on a body 302 having a different shape. Additionally, two passive omnidirectional wheels in a supposed rear end of the body 302 has been replaced by the third wheel arrangement 351. The third wheel arrangement 351 may contribute to power assistance of the body 302 in that it is arranged to provide a third assisting rotation to the wheel 353 of the third wheel arrangement 351 in the wheel's first 356 or second 357 rotational direction.

In the example of Figure 5b, the wheel arrangements 307, 308, 351 are uniformly disposed. That is, the imagined extension 317 of an axis of the wheel of the first wheel arrangement 307 intersects at an angle of approximately 120 degrees with the imagined extension 318 of an axis of the wheel of the second wheel arrangement 308. In the same manner, the imagined extension 317 of an axis of the wheel of the first wheel arrangement 307 intersects at an angle of approximately 120 degrees with an imagined extension 355 of an axis of the wheel 353 of the third wheel arrangement 351. Thereby, assisting rotations of the three wheels may be uniformly distributed and may hence in collaboration provide a user moving the body 302 with power assistance for rotational movements of the body 302 around its center of mass.

Figure 5c shows a body 502 and an exemplifying power assisting system 501 comprising a first 507 and a second 508 wheel arrangement in accordance with the present invention. According to this example, the second wheel arrangement 508 is arranged such that the imagined extension 517 of an axis of the wheel of the first wheel arrangement 507 intersects at an angle of approximately 90 degrees with the imagined extension 518 of an axis of the wheel of the second wheel arrangement 508. With such a disposition of the wheel arrangements 507, 508, rotation of the wheel of the first wheel arrangement 507 in the wheel's first rotational direction 509 or an opposing second rotational direction may hence result in movement of the body 502 in the first 520 or second 521 body direction. Additionally, a first assisting rotation may be provided by the motor 12 of the first wheel arrangement 507 such that power assistance may be provided in the first 520 or second 521 body direction. In a similar manner, rotation of the wheel of the second wheel arrangement 508 in the wheel's first rotational direction or an opposing second rotational direction may hence result in movement of the body 502 in the third 522 or fourth 526 body direction. Additionally, a second assisting rotation may be provided by the motor of the second wheel arrangement 508 such that power assistance may be provided in the third 522 or fourth 526 body direction. The first and second assisting rotations may hence interact to provide power assistance to the fullest in at least the first 520, second 521, third 522 or fourth 526 body direction.

Figure 5d depicts a body 102 and an exemplifying power assisting system 101 comprising a first 107, a second 152, a third 151 and fourth 108 wheel arrangement. The disposition of wheels resembles that of the example of Figure 5c, with the exception that two passive omnidirectional wheels have been replaced by the third 151 and fourth 108 wheel arrangements. Due to the resemblance of the first 107 and second 152 wheel arrangements with those of Figure 5c, the first 107 and second 152 wheel arrangements will not be further discussed.

In the illustrated example of Figure 5d, the fourth wheel arrangement 108 is disposed such that the imagined extension 117 of an axis of the wheel of the first wheel arrangement 107 intersects with the imagined extension 118 of an axis of the wheel of the fourth wheel arrangement 108 at an angle of approximately 0 degrees. The wheels of the first 107 and fourth 108 wheel arrangements are hence essentially in parallel, and the fourth wheel arrangement 108 may provide power assistance in a manner similar to that of the first wheel arrangement 107, i.e. to the fullest for movement in the first 120 and second 121 body directions.

The third wheel arrangement 151 is disposed such that the imagined extension 117 of an axis of the wheel of the first wheel arrangement 107 intersects with an imagined extension 155 of an axis of the wheel of the third wheel arrangement 151 at an angle of approximately 90 degrees. With such a disposition of the third wheel arrangement 151, i.e. the wheel of the third wheel arrangement 151 being essentially perpendicular to the wheel of the first wheel arrangement 107, the third wheel arrangement 151 may provide power assistance to the fullest for movement in the third 122 and fourth 126 body directions. Thereby, the first 107 and the fourth 108 wheel arrangements may collaborate in providing power assistance in movement of the body 102 in at least the first 120 and second 121 body directions, meanwhile the second 152 and the third 151wheel arrangements may collaborate in providing power assistance in movement of the body 102 in at least the third 122 and fourth 126 body directions. Furthermore, interaction between the four wheel arrangements 107, 108, 151, 152 may result in power assistance in any body direction in which the user may choose to maneuver the body 102.

The present invention has been described by way of example, and the person skilled in the art realizes that the present invention by no means is limited to the preferred embodiments described above. It should be appreciated by those skilled in the art that several further alternatives are possible; for example, the features of the different embodiments discussed above may naturally be combined in many other ways.

## Claims

1. A power assisting system (1) for providing power assistance to a user moving a body (2), the body (2) being movable in at least a first (20), a second (21) and a third (22) body direction, said system (1) comprising:
a first wheel arrangement (7) for providing a first assisting rotation comprising:
a multidirectional wheel (3) arranged on said body (2), said wheel (3) being adapted to rotate in a first (9), a second (10) and a third (11) rotational direction;
a motor (12) connected to said wheel (3) for providing an assisting rotation of the wheel in said wheel's first (9) or second (10) rotational direction; and
means (15) for measuring a speed of rotation of said wheel (3) in the wheel's first (9) and second (10) rotational direction; and
a control unit (16);
**characterized in that** said control unit (16) is configured to:
compare a first measured speed of rotation of said wheel (3) in the wheel's first (9) or second (10) rotational direction with at least one previously measured speed of rotation of said wheel (3) in the wheel's first (9) or second (10) rotational direction; and
adjust said first assisting rotation, said first assisting rotation being a reinforcement of the outcome of the comparison,
thereby providing power assistance to said user in moving said body (2) in said first (20) and second (21) body direction.

2. The power assisting system (1) in accordance with claim 1, wherein said multidirectional wheel (3) comprises one or a combination of an omniwheel, polywheel, Mecanum wheel, llon wheel, and Swedish wheel.

3. The power assisting system (1) in accordance with claim 1 or 2,
wherein said means (15) for measuring a speed of rotation of said wheel (3) comprises a hall sensor sensing an angle of a rotor of said motor (12).

4. The power assisting system (1) in accordance with any one of the preceding claims, wherein said body (2) is one of a patient transport vehicle and hoist lift.

5. The power assisting system (1) in accordance with any one of the preceding claims, further comprising:
a second wheel arrangement (8) for providing a second assisting rotation, the second wheel arrangement (8) corresponding to the first wheel arrangement (7);
wherein said control unit (16) is further adapted to:
adjust said second assisting rotation based on a second measured speed of rotation of said wheel (4) of the second wheel arrangement (8) in the wheel's first (23) or second (24) rotational direction and at least one previously measured speed of rotation of said wheel (4) of said second wheel arrangement (8) in the wheel's first (23) or second (24) rotational direction, said first assisting rotation in conjunction with said second assisting rotation providing power assistance to said user in moving said body (2) in said first (20), second (21) and third (22) body direction.

6. The power assisting system (1) in accordance with claim 5, wherein said first (7) and said second (8) wheel arrangements are arranged such that an imagined extension of an axis of the wheel (3) of said first wheel arrangement (7) intersects with an imagined extension of an axis of the wheel (4) of said second wheel arrangement (8).

7. The power assisting system (1) in accordance with claim 6, wherein said first (7) and said second (8) wheel arrangements are arranged such that an imagined extension of an axis of the wheel (3) of said first wheel arrangement (7) intersects at an angle of 80-100 degrees with an imagined extension of an axis of the wheel (4) of said second wheel arrangement (8).

8. The power assisting system (1) in accordance with claim 5, 6 or 7, further comprising:
a third wheel arrangement (351) for providing a third assisting rotation, the third wheel arrangement (351) corresponding to the first wheel arrangement (307);
wherein said control unit (16) is further adapted to:
adjust said third assisting rotation (351) based on a third measured speed of rotation of said wheel (353) of the third wheel arrangement (351) in the wheel's first (356) or second (357) rotational direction and at least one previously measured speed of rotation of said wheel (353) of said third wheel arrangement (351) in the wheel's first (356) or second (357) rotational direction, said first assisting rotation in conjunction with said second and said third assisting rotation providing power assistance to said user in moving said body (302) in said first, second and third body direction.

9. The power assisting system (1) in accordance with claim 8, wherein said first (307), said second (308) and said third (351) wheel arrangements are arranged such that an imagined extension (317) of an axis of the wheel of said first wheel arrangement (307) intersects at an angle of 100-140 degrees with an imagined extension (318) of an axis of the wheel of said second wheel arrangement (308), said imagined extension (317) of an axis of the wheel of said first wheel arrangement (307) intersects at an angle of 100-140 degrees with an imagined extension (355) of an axis of the wheel (353) of said third wheel arrangement (351), and said imagined extension (318) of an axis of the wheel of said second wheel arrangement (308) intersects at an angle of 100-140 degrees with said imagined extension (355) of an axis of the wheel (353) of said third wheel arrangement (351).

10. A power assisting fixture comprising:
a body (2); and
a power assisting system (1) in accordance with claim 1.

11. A method of providing power assistance by means of a power assisting system (1) to a user moving a body (2), the body (2) being movable in at least a first (20), a second (21) and a third (22) body direction, said system (1) comprising:
a first wheel arrangement (7) for providing a first assisting rotation comprising:
a multidirectional wheel (3) arranged on said body (2), said wheel (3) being adapted to rotate in a first (9), a second (10) and a third (11) rotational direction;
a motor (12) connected to said wheel (3) for providing an assisting rotation of the wheel (3) in said wheel's first (9) or second (10) rotational direction; and
means (15) for measuring a speed of rotation of said wheel (3) in the wheel's first (9) and second (10) rotational direction; and
a control unit (16);
**characterized in that** said method comprises the steps of:
receiving (402) a first measured speed of rotation of said wheel (3) in the wheel's first (9) or second (10) rotational direction;
comparing said first assisting rotation based on said first measured speed of rotation and at least one previously measured speed of rotation of said wheel (3) in the wheel's first (9) or second (10) rotational direction,
adjusting (404) said first assisting rotation, said first assisting rotation being a reinforcement of the outcome of the comparinson,
said first assisting rotation providing (406) power assistance to said user in moving said body (2) in said first (20) and second (21) body direction.

12. A computer program for performing the steps of claim 11 when the program is executed in said control unit (16).

## Patentansprüche

1. Hilfskraftsystem (1) zum Bereitstellen von Kraftunterstützung für einen Benutzer, der einen Körper (2) bewegt, wobei der Körper (2) in mindestens eine erste (20), eine zweite (21) und eine dritte (22) Körperrichtung bewegbar ist, wobei das System (1) umfasst:
eine erste Radanordung (7) zum Bereitstellen einer ersten unterstützenden Drehung, umfassend:
ein Mehrrichtungsrad (3), das an dem Körper (2) angeordnet ist, wobei das Rad (3) dazu ausgebildet ist, sich in eine erste (9), eine zweite (10) und eine dritte (11) Drehrichtung zu drehen;
einen Motor (12), der mit der Rad (3) verbunden ist, zum Bereitstellen einer unterstützenden Rotation des Rades (3) in die erste (9) oder die zweite (10) Drehrichtung des Rades; und
ein Mittel (15) zum Messen einer Drehgeschwindigkeit des Rades (3) in der ersten (9) und der zweiten (10) Drehrichtung des Rades; und
eine Steuerung (16);
**dadurch gekennzeichnet, dass** die Steuerung (16) dazu ausgestaltet ist:
eine erste gemessene Drehgeschwindigkeit des Rades (3) in der ersten (9) oder der zweiten (10) Drehrichtung mit mindestens einer zuvor gemessenen Drehgeschwindigkeit des Rades (3) in der ersten (9) oder der zweiten (10) Drehrichtung des Rades zu vergleichen; und die erste unterstützende Drehung einzustellen, wobei die erste unterstützende Drehung eine Verstärkung des Ergebnisses des Vergleichs ist,
wodurch dem Benutzer beim Bewegen des Körpers (2) in die erste (20) und die zweite (21) Körperrichtung Kraftunterstützung bereitgestellt wird.

2. Hilfskraftsystem (1) nach Anspruch 1, wobei das Mehrrichtungsrad (3) eines aus der Gruppe umfassend ein Allseitenrad, Mehrseitenrad, Mecanum-Rad, Ilon-Rad und schwedisches Rad oder eine Kombination daraus umfasst.

3. Hilfskraftsystem (1) nach Anspruch 1 oder 2, wobei das Mittel (15) zum Messen einer Drehgeschwindigkeit des Rades (3) einen Hallsensor umfasst, der einen Winkel eines Rotors des Motors (12) erfasst.

4. Hilfskraftsystem (1) nach einem beliebigen der vorhergehenden Ansprüche, wobei der Körper (2) einer aus der Gruppe umfassend ein Krankentransportfahrzeug und ein Lastenaufzug ist

5. Hilfskraftsystem (1) nach einem beliebigen der vorhergehenden Ansprüche, ferner umfassend:
eine zweite Radanordnung (8) zum Bereitstellen einer zweiten unterstützenden Drehung, wobei die zweite Radanordnung (8) der ersten Radanordnung (7) entspricht;
wobei die Steuerung (16) ferner dazu ausgebildet ist,
die zweite unterstützende Drehung basierend auf einer zweiten gemessenen Drehgeschwindigkeit des Rades (4) der zweiten Radanordnung (8) in der ersten (23) oder der zweiten (24) Drehrichtung des Rades und mindestens einer zuvor gemessenen Drehgeschwindigkeit des Rades (4) der zweiten Radanordnung (8) in der ersten (23) oder der zweiten (24) Drehrichtung des Rades einzustellen, wobei die erste unterstützende Drehung in Verbindung mit der zweiten unterstützenden Drehung dem Benutzer beim Bewegen des Körpers (2) in die erste (20), die zweite (21) und die dritte (22) Körperrichtung Kraftunterstützung bereitstellt.

6. Hilfskraftsystem (1) nach Anspruch 5, wobei die erste (7) und die zweite (8) Radanordnung derart angeordnet sind, dass eine gedachte Verlängerung einer Achse des Rades (3) der ersten Radanordnung (7) eine gedachte Verlängerung einer Achse des Rades (4) der zweiten Radordnung (8) kreuzt.

7. Hilfskraftsystem (1) nach Anspruch 6, wobei die erste (7) und die zweite (8) Radanordnung derart angeordnet sind, dass eine gedachte Verlängerung einer Achse des Rades (3) der ersten Radanordnung (7) eine gedachte Verlängerung einer Achse des Rades (4) der zweiten Radanordnung (8) in einem Winkel von 80-100 Grad kreuzt.

8. Hilfskraftsystem (1) nach Anspruch 5, 6 oder 7, ferner umfassend:
eine dritte Radanordnung (351) zum Bereitstellen einer dritten unterstützenden Drehung, wobei die dritte Radanordnung (351) der ersten Radanordnung (307) entspricht;
wobei die Steuerung (16) ferner dazu ausgebildet ist:
die dritte unterstützende Drehung (351) basierend auf einer dritten gemessenen Drehgeschwindigkeit des Rades (353) der dritten Radanordnung (351) in der ersten (356) oder der zweiten (357) Drehrichtung des Rades und mindestens einer zuvor gemessenen Drehgeschwindigkeit des Rades (353) der dritten Radanordnung (351) in der ersten (356) oder der zweiten (357) Drehrichtung des Rades einzustellen, wobei die erste unterstützende Drehung in Verbindung mit der zweiten und der dritten unterstützenden Drehung dem Benutzer beim Bewegen des Körpers (302) in die erste, die zweite und
die dritte Körperrichtung Kraftunterstützung bereitstellt.

9. Hilfskraftsystem (1) nach Anspruch 8, wobei die erste (307), die zweite (308) und die dritte (351) Radanordnung derart angeordnet sind, dass eine gedachte Verlängerung (317) einer Achse des Rades der ersten Radanordnung (307) eine gedachte Verlängerung (318) einer Achse des Rades der zweiten Radanordnung (308) in einem Winkel von 100-140 Grad kreuzt, die gedachte Verlängerung (317) einer Achse des Rades der ersten Radanordnung (307) eine gedachte Verlängerung (355) einer Achse des Rades (353) der dritten Radanordnung (351) in einem Winkel von 100-140 Grad kreuzt und die gedachte Verlängerung (318) einer Achse des Rades der zweiten Radanordnung (308) die gedachte Verlängerung (355) einer Achse des Rades (353) der dritten Radanordnung (351) in einem Winkel von 100-140 Grad kreuzt.

10. Hilfskrafteinrichtung, umfassend:
einen Körper (2); und
ein Hilfskraftsystem (1) nach Anspruch 1.

11. Verfahren zum Bereitstellen von Kraftunterstützung mittels eines Hilfskraftsystems (1) für einen Benutzer, der einen Körper (2) bewegt, wobei der Körper (2) in mindestens eine erste (20), eine zweite (21) und eine dritte (22) Körperrichtung bewegbar ist, wobei das System (1) umfasst:
eine erste Radanordnung (7) zum Bereitstellen einer ersten unterstützenden Drehung, umfassend:
ein Mehrrichtungsrad (3), das an dem Körper (2) angeordnet ist,
wobei das Rad (3) dazu ausgebildet ist, sich in eine erste (9),
eine zweite (10) und eine dritte (11) Drehrichtung zu drehen;
einen Motor (12), der mit der Rad (3) verbunden ist, zum Bereitstellen einer unterstützenden Rotation des Rades (3) in der ersten (9) oder der zweiten (10) Drehrichtung des Rades;
und
ein Mittel (15) zum Messen einer Drehgeschwindigkeit des Rades (3) in der ersten (9) und der zweiten (10) Drehrichtung des Rades; und
eine Steuerung (16);
**dadurch gekennzeichnet, dass** das Verfahren folgende Schritte umfasst:
Empfangen (402) einer ersten gemessenen Drehgeschwindigkeit des Rades (3) in der ersten (9) oder der zweiten (10) Drehrichtung des Rades;
Vergleichen der ersten unterstützenden Drehung basierend auf der ersten gemessenen Drehgeschwindigkeit und mindestens eine zuvor gemessene Drehgeschwindigkeit des Rades (3) in der ersten (9) oder
der zweiten (10) Drehrichtung des Rades,
Einstellen (404) der ersten unterstützenden Drehung, wobei die erste unterstützende Drehung eine Verstärkung des Ergebnisses des Vergleichs ist,
wobei die erste unterstützende Drehung dem Benutzer beim Bewegen des Körpers (2) in die erste (20) und die zweite (21) Körperrichtung Kraftunterstützung bereitstellt (406).

12. Rechnerprogramm zum Durchführen der Schritte aus Anspruch 11, wenn das Programm in der Steuerung (16) abgearbeitet wird.

## Revendications

1. Système d'assistance électrique (1) pour fournir une assistance électrique à un utilisateur déplaçant un corps (2), le corps (2) étant mobile dans au moins un premier (20), un deuxième (21) et un troisième (22) sens du corps, le système (1) comprenant :
un premier agencement de roue (7) pour fournir une première rotation d'assistance, comprenant :
une roue multidirectionnelle (3) agencée sur le corps (2), la roue (3) étant adaptée pour tourner dans un premier (9), un deuxième (10) et un troisième (11) sens de rotation ;
un moteur (12) relié à la roue (3) pour fournir une rotation d'assistance de la roue dans le premier (9) ou le deuxième (10) sens de rotation ; et
un moyen (15) pour mesurer une vitesse de rotation de la roue (3) dans les premier (9) et deuxième (10) sens de rotation ; et une unité de commande (16) ;
**caractérisé en ce que** l'unité de commande (16) est configurée pour :
la comparaison d'une première vitesse de rotation mesurée de la roue (3) dans le premier (9) ou le deuxième (10) sens de rotation à au moins une vitesse de rotation de la roue (3) mesurée au préalable dans le premier (9) ou le deuxième (10) sens de rotation de la roue ; et
l'ajustement de la première rotation d'assistance, la première rotation d'assistance étant un renforcement du résultat de la comparaison,
fournissant ainsi une assistance électrique à l'utilisateur lorsqu'il déplace le corps (2) dans les premier (20) et deuxième (21) sens du corps.

2. Système d'assistance électrique (1) selon la revendication 1, dans lequel la roue multidirectionnelle (3) comprend une ou une combinaison d'une omniroue, d'une polyroue, d'une roue mecanum, d'une roue llon et d'une roue suédoise.

3. Système d'assistance électrique (1) selon la revendication 1 ou 2, dans lequel le moyen (15) pour mesurer une vitesse de rotation de la roue (3) comprend un capteur à effet hall détectant un angle d'un rotor du moteur (12).

4. Système d'assistance électrique (1) selon l'une quelconque des revendications précédentes, dans lequel le corps (2) est l'un d'un véhicule de transport et élévateur à palan pour des patients.

5. Système d'assistance électrique (1) selon l'une quelconque des revendications précédentes, comprenant en outre :
un deuxième agencement de roue (8) pour fournir une deuxième rotation d'assistance, le deuxième agencement de roue (8) correspondant au premier agencement de roue (7) ;
dans lequel l'unité de commande (16) est en outre adaptée pour :
ajuster la deuxième rotation d'assistance en se basant sur une deuxième vitesse de rotation mesurée de la roue (4) du deuxième agencement de roue (8) dans le premier (23) ou deuxième (24) sens de rotation de la roue et au moins une vitesse de rotation mesurée au préalable de la roue (4) du deuxième agencement de roue (8) dans le premier (23) ou deuxième (24) sens de rotation de la roue, la première rotation d'assistance en liaison avec la deuxième rotation d'assistance fournissant une assistance électrique à l'utilisateur pour déplacer le corps (2) dans les premier (20), deuxième (21) et troisième (22) sens du corps.

6. Système d'assistance électrique (1) selon la revendication 5, dans lequel les premier (7) et deuxième (8) agencements de roue sont agencés de telle sorte qu'une extension imaginée d'un axe de la roue (3) du premier agencement de roue (7) coupe une extension imaginée d'un axe de la roue (4) du deuxième agencement de roue (8).

7. Système d'assistance électrique (1) selon la revendication 6, dans lequel les premier (7) et deuxième (8) agencements de roue sont agencés de telle sorte qu'une extension imaginée d'un axe de la roue (3) du premier agencement de roue (7) coupe à un angle de 80-100 degrés une extension imaginée d'un axe de la roue (4) du deuxième agencement de roue (8).

8. Système d'assistance électrique (1) selon la revendication 5, 6 ou 7, comprenant en outre :
un troisième agencement de roue (351) pour fournir une troisième rotation d'assistance, le troisième agencement de roue (351) correspondant au premier agencement de roue (307) ;
dans lequel l'unité de commande (16) est adaptée en outre pour :
ajuster la troisième rotation d'assistance (351) en se basant sur une troisième vitesse de rotation mesurée de la roue (353) du troisième agencement de roue (351) dans les premier (356) ou deuxième (357) sens de rotation et au moins une vitesse de rotation mesurée au préalable de la roue (353) du troisième agencement de roue (351) dans le premier (356) ou deuxième (357) sens de rotation, la première rotation d'assistance en liaison avec les deuxième et troisième rotations d'assistance fournissant une assistance électrique à l'utilisateur lorsqu'il déplace le corps (302) dans les premier, deuxième et troisième sens du corps.

9. Système d'assistance électrique (1) selon la revendication 8, dans lequel les premier (307), deuxième (308) et troisième (351) agencements de roue sont agencés de telle sorte qu'une extension imaginée (317) d'un axe de la roue du premier agencement de roue (307) coupe à un angle de 100-140 degrés une extension imaginée (318) d'un axe de la roue du deuxième agencement de roue (308), l'extension imaginée (317) d'un axe de la roue du premier agencement de roue (307) coupe à un angle de 100-140 degrés une extension imaginée (355) d'un axe de la roue (353) du troisième agencement de roue (351), et l'extension imaginée (318) d'un axe de la roue du second agencement de roue (308) coupe à un angle de 100-140 degrés l'extension imaginée (355) d'un axe de la roue (353) du troisième agencement de roue (351).

10. Montage d'assistance électrique comprenant :
un corps (2) ; et
un système d'assistance électrique (1) selon la revendication 1.

11. Procédé de fourniture d'assistance électrique au moyen d'un système d'assistance électrique (1) à un utilisateur déplaçant un corps (2), le corps (2) étant mobile dans au moins un premier (20), un deuxième (21) et un troisième (22) sens du corps, le système (1) comprenant :
un premier agencement de roue (7) pour fournir une première rotation d'assistance, comprenant :
une roue multidirectionnelle (3) agencée sur le corps (2), la roue (3) étant adaptée pour tourner dans un premier (9), une deuxième (10) et un troisième (11) sens de rotation ;
un moteur (12) relié à la roue (3) pour fournir une rotation d'assistance de la roue (3) dans le premier (9) ou le deuxième (10) sens de rotation ; et
un moyen (15) pour mesurer une vitesse de rotation de la roue (3) dans les premier (9) et deuxième (10) sens de rotation ; et une unité de commande (16) ;
**caractérisé en ce que** le procédé comprend les étapes de :
réception (402) d'une première vitesse de rotation mesurée de la roue (3) dans le premier (9) ou le deuxième (10) sens de rotation ;
comparaison de la première rotation d'assistance en se basant sur la première vitesse de rotation mesurée à au moins une vitesse de rotation mesurée au préalable de la roue (3) dans le premier (9) ou le deuxième (10) sens de rotation de la roue ; et l'ajustement (404) de la première rotation d'assistance, la première rotation d'assistance étant un renforcement du résultat de la comparaison,
la première rotation d'assistance fournissant (406) une assistance électrique à l'utilisateur lorsqu'il déplace le corps (2) dans les premier (20) et deuxième (21) sens de rotation.

12. Programme informatique pour exécuter les étapes de la revendication 11 lorsque le programme est exécuté dans l'unité de commande (16).
